# EUROPÄISCHE PATENTSCHRIFT

(11) **EP 1 621 945 B1**
(45) Veröffentlichungstag und Bekanntmachung des Hinweises auf die Patenterteilung: **29.03.2017**
(21) Anmeldenummer: 04018120.8
(22) Anmeldetag: 30.07.2004
(51) Int. Cl.: G05B 19/05

(54) **Konsistenzsicherung in einem Automatisierungssystem**
Ensuring data consistency in an automation system
Garantie de la consistance de données dans un système d'automatisation

(43) Veröffentlichungstag der Anmeldung: 01.02.2006
(73) Patentinhaber: Siemens Aktiengesellschaft, 80333 München (DE)
(72) Erfinder: Daimer, Martin, 91058 Erlangen (DE); Karl-Dietze, Ludwig, 90562 Heroldsberg (DE); Macher, Andreas, 92318 Neumarkt (DE); Prieler, Siegfried, 86660 Tapfheim (DE)

(56) Entgegenhaltungen:
- EP-A- 1 347 376
- WO-A-02/073326
- DE-A- 10 116 809

## Beschreibung

Die Erfindung betrifft ein System sowie ein Verfahren zur Ablage von Projektierungsdaten in einem Automatisierungssystem, welches Automatisierungsgeräte enthält.

Bei der Inbetriebnahme eines Automatisierungssystems liegen üblicherweise Projektierungsdaten, z. B. außerhalb des Automatisierungssystems auf einem Rechner oder einem Programmiergerät (PG) gespeichert, und Laufzeitdaten, in Automatisierungsgeräten des Automatisierungssystems abgelegt, vor. Projektierungsdaten und Laufzeitdaten sind zum Zeitpunkt der Inbetriebnahme konsistent zueinander. Üblicherweise wird zu diesem Zeitpunkt vom Anwender eine Kopie der Projektierungsdaten gespeichert, welche als so genannte Master-Projektkopie Grundlage aller späteren Modifikationen des Automatisierungssystems sein sollte, um die Datenkonsistenz zu sichern. Die Sicherung der Konsistenz zwischen Projektierungs- und Laufzeitdaten liegt bisher in Verantwortung des Anwenders. Es ist kein System bekannt, welches sicherstellt, dass Änderungen, die nach der Inbetriebnahme des Automatisierungssystems erfolgen, automatisch in den Daten der Master-Projektkopie nachgezogen werden. Solche Änderungen können beispielsweise Anlagenerweiterungen sein, das Auftreten eines Servicefalls bei Problemen in der Anlage usw. Somit kann üblicherweise nicht garantiert werden, dass immer Projektierungsdaten vorliegen, die zu den auf den Automatisierungsgeräten gespeicherten Laufzeitdaten konsistent sind. Es wird üblicherweise versucht, die beschriebenen Probleme durch Verfahrensanweisungen an die Anwender des Automatisierungssystems in den Griff zu bekommen, welche eine disziplinierte Arbeitsweise bei Änderungen der Anlage erzwingen sollen.

Die EP 1 347 376 A2 beschreibt ein System und Verfahren zur Projektierung eines Automatisierungssystems, wobei für eine einheitliche Projektierung bei gleichzeitig konsistenter Datenhaltung ein Projektierungssystem mit einem einheitlichen Datenmodell genutzt wird, das auf einem Objektbaum mit hierarchisch stufbaren Objekten basiert.

Weiterhin ist aus der Offenlegungsschrift DE 101 16 809 A1 eine programmierbare Steuereinrichtung bekannt, welche eine sequentielle Verarbeitung durchführt in Übereinstimmung mit Ausführungscodes, die durch Kompilieren eines Steuerprogramms erzeugt werden.

Der Erfindung liegt die Aufgabe zugrunde, eine effektive Konsistenzsicherung innerhalb eines Automatisierungssystems zu ermöglichen.

Diese Aufgabe wird durch ein System mit den Merkmalen des Anspruchs 1 gelöst. Das erfindungsgemäße System dient zur Ablage von Projektierungsdaten in einem Automatisierungssystem, welches Automatisierungsgeräte enthält, wobei die Projektierungsdaten Laufzeitdaten zugeordnet sind, wobei die Projektierungsdaten zusammen mit den ihnen zugeordneten Laufzeitdaten zugreifbar sind und in den Automatisierungsgeräten gespeichert sind, wobei Erkennungsmittel zum Erkennen von Änderungen an den Laufzeitdaten und den Projektierungsdaten vorgesehen sind, wobei Prüfmittel zum Prüfen der Abhängigkeiten zwischen den Laufzeitdaten und den Projektierungsdaten vorgesehen sind.

Diese Aufgabe wird durch ein Verfahren mit den Merkmalen des Anspruchs 9 gelöst. Das erfindungsgemäße Verfahren dient zur Ablage von Projektierungsdaten in einem Automatisierungssystem, welches Automatisierungsgeräte enthält, wobei die Projektierungsdaten Laufzeitdaten zugeordnet werden, wobei auf die Projektierungsdaten zusammen mit den ihnen zugeordneten Laufzeitdaten zugegriffen werden kann und die Projektierungsdaten zusammen mit den ihnen zugeordneten Laufzeitdaten in den Automatisierungsgeräten gespeichert werden, wobei Änderungen an den Laufzeitdaten und den Projektierungsdaten durch Erkennungsmittel erkannt werden und wobei Abhängigkeiten zwischen den Laufzeitdaten und den Projektierungsdaten durch Prüfmittel geprüft werden.

Die Erfindung ermöglicht es, die Konsistenz zwischen Laufzeitdaten auf dem Automatisierungssystem und den zugehörigen Projektierungsdaten sicherzustellen. Ein Anwender wird nicht länger damit belastet, bei Modifikationen im Automatisierungssystem Maßnahmen zur Konsistenzsicherung durchführen zu müssen. Diese Aufgabe wird ihm bei Einsatz der Erfindung vom System abgenommen. Der Erfindung liegt die Idee zugrunde, die Projektierungsdaten zunächst in einem Arbeitsgang verteilt im Automatisierungssystem abzulegen, wobei die Projektierungsdaten zusammen mit den ihnen zugeordneten Laufzeitdaten übertragen und in den Automatisierungsgeräten gespeichert werden. Die Granularität des Ladevorgangs ist so, dass für jedes Objekt der Laufzeitdaten immer die dazugehörigen Projektierungsdaten übertragen bzw. abgelegt werden. Somit stehen für den Anwender immer die aktuellen zugehörigen Projektierungsdaten zur Verfügung. Hat der Anwender Änderungen am Automatisierungsprojekt vorgenommen, d. h. die Projektierungsdaten geändert, und will diese geänderten Projektierungsdaten in das Automatisierungssystem zurückspielen, so erkennen die Erkennungsmittel des Systems automatisch, an welchen Teilen der Projektierungsdaten, d. h. in welchen Engineering-Projekten, Änderungen vorgenommen wurden. Durch eine Überprüfung der Abhängigkeiten durch die Prüfmittel ist das System außerdem in der Lage, zu ermitteln, welche weiteren Projektierungsdaten indirekt von den Änderungen betroffen sind. Beim Aktualisieren der Laufzeitdaten in den Automatisierungsgeräten des Automatisierungssystems werden automatisch alle geänderten und alle betroffenen Daten - sowohl die Laufzeitdaten als auch die Projektierungsdaten - in die Automatisierungsgeräte des Systems geladen. Die Konsistenz zwischen den Laufzeitdaten und den zugehörigen Projektierungsdaten bleibt also auch nach der Anlagenmodifikation erhalten.

Das erfindungsgemäße System und Verfahren bestimmt einen möglichen Ablageort der Master-Projektkopie im Automatisierungssystem, für den alle Änderungen einem Konsistenzsicherungsmechanismus unterliegen. Das bietet dem Anwender sowie dem Projekteur der Automatisierungslösung Vorteile. Dem Anwender stehen immer die vollständigen, aktuellen Projektierungsdaten zur Verfügung, die konsistent zu den Laufzeitdaten in der Anlage liegen. Die online vorhandenen Projektierungsdaten bleiben bei allen Anlagenmodifikationen konsistent, wobei die Verantwortung für die Wahrung der Konsistenz nicht beim Projekteur liegt, sondern vom System übernommen wird.

Gemäß einer vorteilhaften Ausgestaltung der Erfindung sind die Projektierungsdaten parallel zu den ihnen jeweils zugeordneten Laufzeitdaten in den Laufzeitdaten jeweils zugeordneten Automatisierungsgeräten verteilt gespeichert. Damit wird sichergestellt, dass der Anwender auch bei Kommunikationsstörungen im Kommunikationsnetz des Automatisierungssystems in jedem Automatisierungsgerät die für dieses Gerät relevanten Projektierungs- und Laufzeitdaten vorliegen hat.

Um sowohl Anlagenerweiterungen als auch die Kopplung mit verschiedenen Applikationen zu ermöglichen, wird gemäß einer weiteren vorteilhaften Ausgestaltung der Erfindung vorgeschlagen, dass die Projektierungsdaten in einem generischen, erweiterbaren Datenablageformat gespeichert sind.

Üblicherweise ist der Zugriff auf Projektierungsdaten in einem Automatisierungssystem während der Abarbeitung von Anwenderprogrammen nicht möglich. Um den Zugriff auf Projektierungsdaten während der Laufzeit im Automatisierungssystem zu ermöglichen, ist gemäß einer weiteren vorteilhaften Ausgestaltung der Erfindung vorgesehen, dass die Projektierungsdaten durch die Firmware des Automatisierungssystems lesbar und interpretierbar sind. Dazu ist es insbesondere vorteilhaft, wenn die Firmware einen Parser zur Interpretation des Datenablageformats, in dem die Projektierungsdaten gespeichert sind, aufweist.

Eine Navigation durch das komplette Automatisierungsprojekt wird ermöglicht, wenn gemäß einer weiteren vorteilhaften Ausgestaltung der Erfindung die Firmware des Automatisierungssystems eine generische Schnittstelle zum pfadorientierten Zugriff auf in Form eines Projektbaums abgelegte Projektierungsdaten aufweist. Um den Zugriff auf bestimmte Projektierungsdaten, die häufig angefragt werden, z. B. Symbole und Meldungen, zu beschleunigen, wird gemäß einer weiteren vorteilhaften Ausgestaltung der Erfindung vorgeschlagen, dass die Firmware des Automatisierungssystems eine spezifische Schnittstelle mit vordefinierten Zugriffswegen zum Zugriff auf abgelegte Projektierungsdaten aufweist.

Gemäß einer weiteren vorteilhaften Ausgestaltung der Erfindung ist das Datenablageformat, in dem die Projektierungsdaten gespeichert sind, durch ein vordefiniertes Objektmodell, repräsentiert durch einen Projektbaum, und durch Schema-Definitionsdateien festgelegt.

Nachfolgend wird die Erfindung anhand der in den Figuren dargestellten Ausführungsbeispiele näher beschrieben und erläutert.

Es zeigen:
- FIG 1: ein Automatisierungssystem mit Automatisierungsgeräten,
- FIG 2: eine schematische Darstellung der Abhängigkeiten zwischen Projektierungsdaten und Laufzeitdaten,
- FIG 3: eine schematische Darstellung der Prüfung von Abhängigkeiten zwischen Objekten und
- FIG 4: einen Zugriff auf Projektierungsdaten über eine Firmwareschnittstelle.

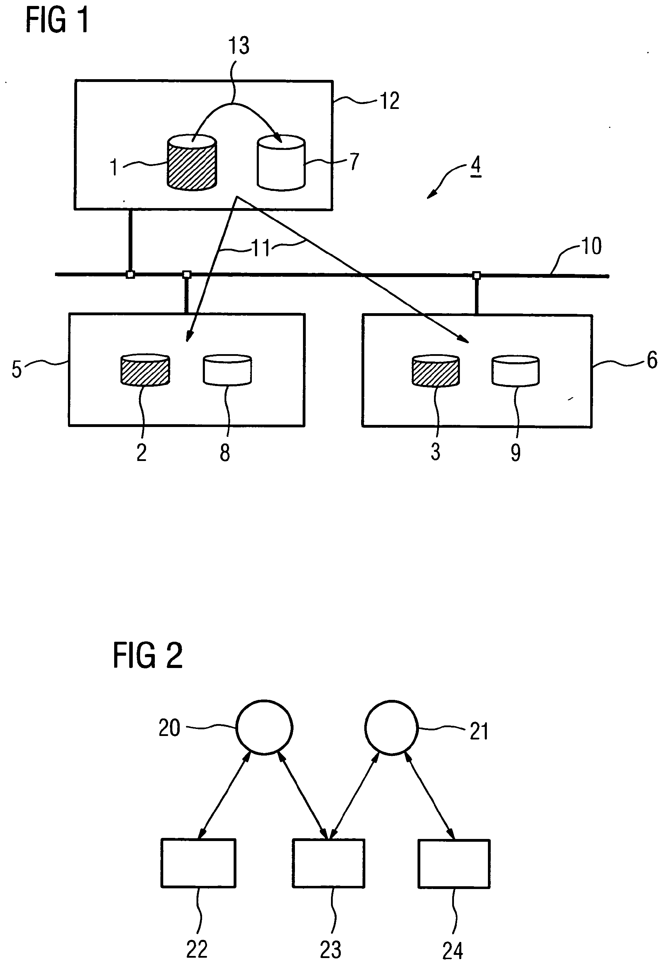

FIG 1 zeigt ein Automatisierungssystem 4, welches über ein Kommunikationsnetz 10, z. B. ein Bussystem, verbundene Automatisierungsgeräte 5, 6 enthält. An das Kommunikationsnetz 10 ist zudem ein Rechner 12, z.B. ein mobiles Programmiergerät, angeschlossen. Der Rechner 12 selbst ist nicht Teil des Automatisierungssystems 4. Mit Hilfe des Rechners 12 erstellt ein Anwender Projektierungsdaten 1, welche in einem Konvertierungsschritt 13 in Laufzeitdaten 7 umgewandelt werden. Die Laufzeitdaten 7 enthalten ablauffähige Programmteile, welche z. B. ein Steuerungsprogramm innerhalb des Automatisierungssystems darstellen. Bisher liegt üblicherweise das Projektierungstool sowie die von diesem erzeugten Projektierungsdaten auf einem vom Automatisierungsgerät getrennten Rechner, z. B. einem PC oder einem Programmiergerät. Ins Automatisierungssystem werden bisher nur die reinen Laufzeitdaten geladen, welche jedoch nur einen geringen Teil der Informationen umfassen, die in den Projektierungsdaten hinterlegt sind.

Gemäß dem hier dargestellten Ausführungsbeispiel der Erfindung liegen die Projektierungsdaten 1 in einem generischen, erweiterbaren Datenablageformat vor. Teile 2, 3 der Projektierungsdaten 1 sind jeweils bestimmten Teilen 8, 9 der Laufzeitdaten 7 zugeordnet. Die Teile 8, 9 der Laufzeitdaten 7 sind wiederum jeweils einem Automatisierungsgerät 5 bzw. 6 zugeordnet. Durch die mit dem Bezugszeichen 11 gekennzeichneten Pfeile wird der Vorgang der Speicherung der Teile 2, 3 der Projektierungsdaten bzw. der Teile 8, 9 der Laufzeitdaten gekennzeichnet. Die Teile 2, 3 der Projektierungsdaten werden dabei parallel zu den ihnen jeweils zugeordneten Laufzeitdaten 8, 9 in den den Laufzeitdaten, 8, 9 jeweils zugeordneten Automatisierungsgeräten 5, 6 verteilt gespeichert. Es werden sowohl die Projektierungsdaten 2, 3 als auch die reinen Laufzeitdaten 8, 9 bei allen Änderungen in die Automatisierungsgeräte 5, 6 des Automatisierungssystem 4 geladen. Dadurch sind die Projektierungsdaten immer konsistent zu den Laufzeitdaten.

FIG 2 zeigt exemplarisch die Abhängigkeiten zwischen Projektierungsdaten und Laufzeitdaten. Die Projektierungsdaten liegen dabei in Form von Engineering-Objekten 22 - 24 vor, während die Laufzeitdaten als so genannte Runtime-Objekte 20, 21 vorliegen. Im gezeigten Fall wird das Runtime-Objekt 20 aus den Engineering-Objekten 22 und 23 gebildet, das Runtime-Objekt 21 aus den Engineering-Objekten 23 und 24. Im Ausführungsbeispiel sind die Erkennungsmittel zum Erkennen von Änderungen an den Laufzeitdaten und den Projektierungsdaten sowie die Prüfmittel zum Prüfen der Abhängigkeiten zwischen den Laufzeitdaten und den Projektierungsdaten als so genannte Make-Funktion ausgebildet, die im Folgenden näher erläutert wird. Werden Laufzeitdaten und/oder Projektierungsdaten geladen, so werden Abhängigkeiten zwischen den verschiedenen geänderten Runtime-Objekten und Engineering-Objekten durch die Make-Funktion geprüft. Wenn die Engineering-Objekte ebenfalls verändert wurden, überprüft die Make-Funktion in einem weiteren Schritt, welche Runtime-Objekte von der Änderung von Engineering-Objekten betroffen sind. Wenn weitere Objekte gefunden werden, so setzt sich die Iteration fort, bis keine neuen Runtime-Objekte mehr gefunden werden. Dieser Mechanismus kann für beliebige Ladevorgänge verwendet werden, seien es Ladevorgänge von Projektierungsdaten oder Ladevorgänge von Laufzeitdaten.

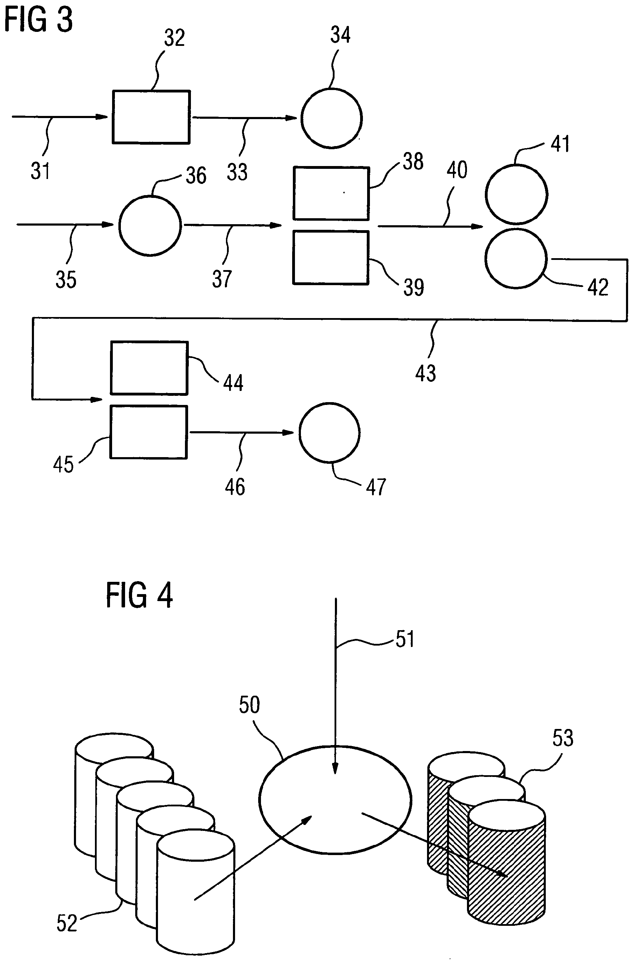

FIG 3 zeigt eine schematische Darstellung der Prüfung von Abhängigkeiten zwischen Objekten durch Prüfmittel. Ein Engineering-Objekt 32, welches dem Engineering-Objekt 22 aus FIG 2 entspricht, wird in einem ersten Schritt 31 geändert. In einem zweiten Schritt 33 wird das Engineering-Objekt kompiliert, so dass ein Runtime-Objekt 34 gebildet wird, welches dem Runtime-Objekt 20 aus FIG 2 entspricht. Das derart geänderte Runtime-Objekt 34 wird in einem nächsten Schritt 35 als Runtime-Objekt 36 auf das ihm zugeordnete Automatisierungsgerät geladen. Im nächsten Schritt 37 werden durch die Prüfmittel, z. B. die oben genannte Make-Funktion, Abhängigkeiten gesucht, und als erstes Ergebnis werden Abhängigkeiten zwischen dem Runtime-Objekt 20 und den Engineering-Objekten 22, 23 gemäß FIG 2 ermittelt. Die ermittelten von dem Runtime-Objekt 36 abhängigen Engineering-Objekte werden in FIG 3 mit den Bezugszeichen 38 bzw. 39 gekennzeichnet. Im nächsten Schritt 40 wird automatisch nach Abhängigkeiten der Engineering-Objekte gesucht. Als Ergebnis werden das bereits bekannte Runtime-Objekt 20 gemäß FIG 2 und das Runtime-Objekt 21 gemäß FIG 2 ermittelt. In einem nächsten Schritt 43 wird wiederum überprüft, welche Abhängigkeiten das Runtime-Objekt 42 aufweist und als Ergebnis werden die Engineering-Objekte 23, 24 gemäß FIG 2 ermittelt. In einem nächsten Schritt werden Abhängigkeiten des Engineering-Objekts 24 bzw. 45 gemäß FIG 3 ermittelt, in diesem Fall das Runtime-Objekt 21 gemäß FIG 2 bzw. 47 gemäß FIG 3. Das Ergebnis der Abhängigkeitsprüfung ist also, dass beim Laden des Runtime-Objekts 20 die Engineering-Objekte 22, 23 und 24 sowie das Runtime-Objekt 21 mitgeladen werden müssen, da diese Objekte durch Abhängigkeiten miteinander gekoppelt sind und somit durch die Änderungen am Engineering-Objekt 22 bzw. Runtime-Objekt 20 betroffen sind.

FIG 4 zeigt den Zugriff auf Projektierungsdaten 53 über eine Firmwareschnittstelle 50. Dabei erfolgt ein Zugriff 51 von außerhalb des Automatisierungsgeräts über eine Firmwareschnittstelle 50 auf die Projektierungsdaten 53. Änderungen an den Laufzeitdaten 52 des Automatisierungsgeräts werden ebenfalls über die Firmwareschnittstelle 50 an die Projektierungsdaten 53, die im Automatisierungsgerät gespeichert werden, weitergegeben.

Dabei werden die Projektierungsdaten 53 konsistent zu den Laufzeitdaten 52 auf der Zentraleinheit (CPU) des Automatisierungsgeräts abgelegt und auch bei Änderungen konsistent gehalten. Sie werden in einem generischen Datenablageformat (z. B. XML) in Form von Bausteinen abgelegt. Dadurch ist ihr prinzipieller Aufbau bekannt. Neue Zugriffsfunktionen können nun über die Standard-Kommunikationswege der CPU einen Zugriff auf die Projektierungsdaten 53 ermöglichen ohne diese hochladen und im Programmiergerät interpretieren zu müssen. Dies geschieht über die Firmware des Automatisierungssystems.

Damit ein solcher Zugriff möglich ist, wird dort ein einfacher Parser für den generischen Datenbaum umgesetzt, der es ermöglicht, über Firmwarefunktionen über die Daten zu navigieren. Eine Schnittstelle im Automatisierungsgerät, welche die Methoden Up, Down, Next, Value und Attribute bereitstellt, reicht zur Navigation aus.

Zwei verschiedene Firmware-Schnittstellen werden definiert. Zum Einen eine generische Schnittstelle. Hier wird eine grundlegende Kenntnis des prinzipiellen Ablageformates vorausgesetzt. Mit dieser Schnittstelle ist prinzipiell eine Navigation durch den kompletten Projektbaum möglich. Eingangsparameter ist z. B. ein XPATH- Ausdruck, Ergebnis ist das Ergebnis der Auswertung. Zum Anderen wird eine spezielle Schnittstelle definiert. Hier werden zur Performancesteigerung Zugriffswege auf bestimmte Projektierungsdaten, die häufig angefragt werden, vordefiniert. Beispiele hierfür sind Symbole und Meldungen. Beide Schnittstellen realisieren unterschiedliche Methoden, auf die Anwenderdaten zuzugreifen. Für den Zugriff auf die Projektierungsdaten aus dem Anwenderprogramm können neue Bibliotheksfunktionen zur Verfügung gestellt werden. Hier wird über die Firmware direkt auf die projektierten Daten zugegriffen. Solchermaßen realisierte Firmwareschnittstellen erlauben es, dass Projektierungstools auf die im Automatisierungsgerät abgelegten Projektierungsdaten aufsetzen können, ohne diese laden zu müssen. Wichtig hierbei ist, dass die Tools nur grundlegende Informationen über das Ablageschema der Daten auf dem Automatisierungsgerät besitzen müssen, um die Daten laden zu können. Ist dies der Fall, so wird die Mächtigkeit und die Effizienz dieser Tools vergrößert, ohne das System durch proprietäre Datenformate und aufwendige Datenhantierung unnötig kompliziert zu machen.

Daraus ergibt sich unmittelbar, dass die bisherige Projektierung des Anwenders nun als Input verwendet werden kann. Diese Daten müssen nicht erneut eingegeben werden und Informationen aus diesen Daten können für Default- Einstellungen verwendet werden. Weitere Anwendungsszenarien für Automatisierungssysteme mit den vorgeschlagenen Firmware-Schnittstellen:
- Über Schnittstellen der CPU-Firmware kann aus Bausteinen heraus zur Laufzeit direkt auf Projektierung oder Bibliotheksfunktionen im Anwenderprogramm zugegriffen werden, die eventuell dann auch nachgeladen werden können. So würde es eine Schnittstelle in der Firmware ermöglichen, dass das Automatisierungssystem direkt auf die Daten der Offline Hardware-Projektierung zugreifen kann. Die Parametrierung der CPUs wird dabei in Form von HEX-Dumps der Binärdaten in den Projektdaten abgelegt. Ein einfacher Zugriff ermöglicht es so, die Parametrierung eines Gerätes zu ermitteln.
- HMI-Geräte können direkt auf Daten des Anwenderprojektes zugreifen um sich hier z. B. die benötigte Symbolinformation oder neu definierte Meldungen abzuholen.
- Die Schnittstelle stellt einen Standard-Zugriffsweg für die Diagnose über Webserver dar. Zur Laufzeit auf die Projektierungsdaten zuzugreifen bietet eine einfache Möglichkeit, die Anforderungen zu erfüllen, ohne neue workarounds definieren zu müssen.
- Die Schnittstelle kann für die Zwecke des Konfigurationsmanagements eingesetzt werden: Über die Projektierungsdaten können die benötigten Informationen gewonnen werden (z. B. Zeitstempel, Kommentare, Namen, etc.). Mit Hilfe des Konfigurationsmanagements ist es dann automatisiert möglich, den Ist-Ausbau eines Automatisierungssystems zu überprüfen. Hierzu ist es erforderlich, z. B. die Versionsinformation zum Programm (oder einzelnen Teilen) abzufragen. Da die Konsistenz der Projektierungs- zu den Laufzeitdaten sichergestellt ist, kann der Ist-Ausbau (der Anwenderprogramme) aus der Information der Projektierungsdaten gewonnen werden.
- Durch Ablage dieser Daten ist es möglich in der Laufzeitumgebung konsistente Erweiterungen an den Projektierungsdaten vorzunehmen, die dann ebenfalls auf dem Automatisierungsgerät abgelegt werden würden.

Es ist somit möglich, direkt über Schnittstellen in der Firmware eines Automatisierungssystems auf die Projektierungsdaten zuzugreifen. Dabei ist es unerheblich, ob der Zugreifende ein gerade auf dem Automatisierungsgerät ablaufendes Programm oder ein externes Tool auf einem Programmiergerät ist. Die Zugriffsschnittstelle in der Firmware des Automatisierungsgerätes stellt sicher, dass angeforderte Projektdaten immer zur Verfügung gestellt werden. Die Projektierungsinformationen können von verschieden Clients genutzt werden. Der Nutzungszweck ist dabei unerheblich.

Zusammengefasst betrifft die Erfindung somit ein System sowie ein Verfahren zur Ablage von Projektierungsdaten 1, 2, 3 in einem Automatisierungssystem 4, welches Automatisierungsgeräte 5, 6 enthält. Um eine effektive Konsistenzsicherung innerhalb des Automatisierungssystems 4 zu ermöglichen, sind die Projektierungsdaten 1, 2, 3 Laufzeitdaten 7, 8, 9 zugeordnet, wobei die Projektierungsdaten 1, 2, 3 zusammen mit den ihnen zugeordneten Laufzeitdaten 7, 8, 9 zugreifbar sind und in den Automatisierungsgeräten 5, 6 gespeichert sind, wobei Erkennungsmittel zum Erkennen von Änderungen an den Laufzeitdaten 7, 8, 9 und den Projektierungsdaten 1, 2, 3 vorgesehen sind und wobei Prüfmittel zum Prüfen der Abhängigkeiten zwischen den Laufzeitdaten 7, 8, 9 und den Projektierungsdaten 1, 2, 3 vorgesehen sind.

## Patentansprüche

1. System mit einem Rechner (12) zur Sicherstellung der Konsistenz zwischen Laufzeitdaten und den zugehörigen Projektierungsdaten (1, 2, 3) in einem Automatisierungssystem (4), welches Automatisierungsgeräte (5, 6) enthält,
• wobei die Projektierungsdaten (1, 2, 3) Laufzeitdaten (7, 8, 9) zugeordnet sind, und wobei die Projektierungsdaten (1, 2, 3) mithilfe des Rechners (12) erstellt und in einem Konvertierungsschritt (13) in die Laufzeitdaten (7, 8, 9) umgewandelt wurden,
• wobei die Projektierungsdaten (1, 2, 3) zusammen mit den ihnen zugeordneten Laufzeitdaten (7, 8, 9) zugreifbar sind und in den Automatisierungsgeräten (5, 6) gespeichert sind,
• wobei eine automatische, mittles einer fortlaufenden Iteration durchgeführte Prüfroutine vorgesehen ist, die Erkennungsmittel zum Erkennen von Änderungen an den Laufzeitdaten (7, 8, 9) und den Projektierungsdaten (1, 2, 3) aufweist, und die
• Prüfmittel zum Prüfen der Abhängigkeiten zwischen den Laufzeitdaten (7, 8, 9) und den Projektierungsdaten (1, 2, 3) aufweist, die im Falle des Erkennens einer Änderung Abhängigkeiten zwischen den Laufzeitdaten (7, 8, 9) und den Projektierungsdaten (1, 2, 3) ermittelt und beim Aktualisieren der Laufzeitdaten (7, 8, 9) automatisch alle geänderten und alle betroffenen Daten in die Automatisierungsgeräte lädt.

2. System nach Anspruch 1,
**dadurch gekennzeichnet,**
**dass** die Projektierungsdaten (1, 2, 3) parallel zu den ihnen jeweils zugeordneten Laufzeitdaten (7, 8, 9) in den Laufzeitdaten (7, 8, 9) jeweils zugeordneten Automatisierungsgeräten (5, 6) verteilt gespeichert sind.

3. System nach Anspruch 1 oder 2,
**dadurch gekennzeichnet,**
**dass** die Projektierungsdaten (1, 2, 3) in einem generischen, erweiterbaren Datenablageformat gespeichert sind.

4. System nach einem der vorhergehenden Ansprüche,
**dadurch gekennzeichnet,**
**dass** die Projektierungsdaten (1, 2, 3) durch die Firmware des Automatisierungssystems lesbar und interpretierbar sind.

5. System nach einem der vorhergehenden Ansprüche,
**dadurch gekennzeichnet,**
**dass** die Firmware einen Parser zur Interpretation des Datenablageformats, in dem die Projektierungsdaten (1, 2, 3) gespeichert sind, aufweist.

6. System nach einem der vorhergehenden Ansprüche,
**dadurch gekennzeichnet,**
**dass** die Firmware des Automatisierungssystems eine generische Schnittstelle zum pfadorientierten Zugriff auf in Form eines Projektbaums abgelegte Projektierungsdaten (1, 2, 3) aufweist.

7. System nach einem der vorhergehenden Ansprüche,
**dadurch gekennzeichnet,**
**dass** die Firmware des Automatisierungssystems eine spezifische Schnittstelle mit vordefinierten Zugriffswegen zum Zugriff auf abgelegte Projektierungsdaten (1, 2, 3) aufweist.

8. System nach einem der vorhergehenden Ansprüche,
**dadurch gekennzeichnet,**
**dass** das Datenablageformat, in dem die Projektierungsdaten (1, 2, 3) gespeichert sind, durch ein vordefiniertes Objektmodell, repräsentiert durch einen Projektbaum, und durch Schema-Definitionsdateien festgelegt ist.

9. Verfahren zur Sicherstellung der Konsistenz zwischen Laufzeitdaten und den zugehörigen Projektierungsdaten (1, 2, 3) in einem Automatisierungssystem (4), welches Automatisierungsgeräte (5, 6) enthält,
• wobei die Projektierungsdaten (1, 2, 3) mittels eines Rechners (12) erstellt und in einem Konvertierungsschritt (13) in Laufzeitdaten (7, 8, 9) umgewandelt werden, und wobei die Projektierungsdaten (1, 2, 3) den Laufzeitdaten (7, 8, 9) zugeordnet werden,
• wobei auf die Projektierungsdaten (1, 2, 3) zusammen mit den ihnen zugeordneten Laufzeitdaten (7, 8, 9) zugegriffen werden kann und die Projektierungsdaten (1, 2, 3) zusammen mit den ihnen zugeordneten Laufzeitdaten (7, 8, 9) in den Automatisierungsgeräten (5, 6) gespeichert werden,
• wobei von einer automatischen, mittles einer fortlaufenden Iteration durchgeführten Prüfroutine durch Erkennungsmittel Änderungen an den Laufzeitdaten (7, 8, 9) und den Projektierungsdaten (1, 2, 3) erkannt werden, und
• wobei von dieser Prüfroutine durch Prüfmitteln im Falle des Erkennens einer Änderung Abhängigkeiten zwischen den Laufzeitdaten (7, 8, 9) und den Projektierungsdaten (1, 2, 3) ermittelt werden und beim Aktualisieren der Laufzeitdaten (7, 8, 9) automatisch alle geänderten und alle betroffenen Daten in die Automatisierungsgeräte geladen werden.

10. Verfahren nach Anspruch 9,
**dadurch gekennzeichnet,**
**dass** die Projektierungsdaten (1, 2, 3) parallel zu den ihnen jeweils zugeordneten Laufzeitdaten (7, 8, 9) in den Laufzeitdaten (7, 8, 9) jeweils zugeordneten Automatisierungsgeräten (5, 6) verteilt gespeichert werden.

11. Verfahren nach Anspruch 9 oder 10,
**dadurch gekennzeichnet,**
**dass** die Projektierungsdaten (1, 2, 3) in einem generischen, erweiterbaren Datenablageformat gespeichert werden.

12. Verfahren nach einem der Ansprüche 9 bis 11,
**dadurch gekennzeichnet,**
**dass** die Projektierungsdaten (1, 2, 3) durch die Firmware des Automatisierungssystems gelesen und interpretiert werden können.

13. Verfahren nach einem der Ansprüche 9 bis 12,
**dadurch gekennzeichnet,**
**dass** die Firmware mit einem Parser das Datenablageformat, in dem die Projektierungsdaten (1, 2, 3) gespeichert sind, interpretiert.

14. Verfahren nach einem der Ansprüche 9 bis 13,
**dadurch gekennzeichnet,**
**dass** über eine generische Schnittstelle der Firmware des Automatisierungssystems auf in Form eines Projektbaums abgelegte Projektierungsdaten (1, 2, 3) pfadorientiert zugegriffen werden kann.

15. Verfahren nach einem der Ansprüche 9 bis 14,
**dadurch gekennzeichnet,**
**dass** über eine spezifische Schnittstelle der Firmware des Automatisierungssystems auf abgelegte Projektierungsdaten (1, 2, 3) über vordefinierte Zugriffswege zugegriffen werden kann.

16. Verfahren nach einem der Ansprüche 9 bis 15,
**dadurch gekennzeichnet,**
**dass** das Datenablageformat, in dem die Projektierungsdaten (1, 2, 3) gespeichert sind, durch ein vordefiniertes Objektmodell, repräsentiert durch einen Projektbaum, und durch Schema-Definitionsdateien festgelegt ist.

## Claims

1. System having a computer (12) for ensuring consistency between runtime data and the associated project planning data (1, 2, 3) in an automation system (4) that contains automation devices (5, 6),
• wherein the project planning data (1, 2, 3) is assigned to runtime data (7, 8, 9), and wherein the project planning data (1, 2, 3) has been created with the aid of the computer (12) and converted in a conversion step (13) into the runtime data (7, 8, 9),
• wherein the project planning data (1, 2, 3) is accessible together with the runtime data (7, 8, 9) assigned to it and is stored in the automation devices (5, 6),
• wherein an automatic test routine performed by means of a continuous iteration is provided, which has detection means for detecting changes to the runtime data (7, 8, 9) and the project planning data (1, 2, 3), and which
• has test means for checking the relationships between the runtime data (7, 8, 9) and the project planning data (1, 2, 3), which in the event of a change being detected determines relationships between the runtime data (7, 8, 9) and the project planning data (1, 2, 3), and during updating of the runtime data (7, 8, 9) all changed and all affected data is automatically loaded into the automation devices.

2. System according to claim 1,
**characterised in that**
the project planning data (1, 2, 3) is stored parallel to the runtime data (7, 8, 9) assigned to it in each case, distributed among the automation devices (5, 6) assigned to the runtime data (7, 8, 9) in each case.

3. System according to claim 1 or 2,
**characterised in that**
the project planning data (1, 2, 3) is stored in a generic, expandable data filing format.

4. System according to one of the preceding claims,
**characterised in that**
the project planning data (1, 2, 3) can be read and interpreted by the firmware of the automation system.

5. System according to one of the preceding claims,
**characterised in that**
the firmware has a parser for interpretation of the data filing format in which the project planning data (1, 2, 3) is stored.

6. System according to one of the preceding claims,
**characterised in that**
the firmware of the automation system has a generic interface for path-oriented access to project planning data (1, 2, 3) stored in the form of a project tree.

7. System according to one of the preceding claims,
**characterised in that**
the firmware of the automation system has a specific interface with predefined access paths for access to stored project planning data (1, 2, 3).

8. System according to one of the preceding claims,
**characterised in that**
the data filing format in which the project planning data (1, 2, 3) is stored is specified by a predefined object model, represented by a project tree and by pattern definition files.

9. Method for ensuring consistency between runtime data and the associated project planning data (1, 2, 3) in an automation system (4) that contains automation devices (5, 6),
• wherein the project planning data (1, 2, 3) is created with the aid of the computer (12) and is converted in a conversion step (13) into runtime data (7, 8, 9), and wherein the project planning data (1, 2, 3) is assigned to the runtime data (7, 8, 9),
• wherein the project planning data (1, 2, 3) is accessible together with the runtime data (7, 8, 9) assigned to it and the project planning data (1, 2, 3) together with the runtime data (7, 8, 9) assigned to it is stored in the automation devices (5, 6),
• wherein changes to the runtime data (7, 8, 9) and the project planning data (1, 2, 3) are detected by an automatic test routine performed by detection means by means of a continuous iteration, and
• wherein relationships between the runtime data (7, 8, 9) and the project planning data (1, 2, 3) are detected by said test routine by test means in the event of a change being detected, and during updating of the runtime data (7, 8, 9) all changed and all affected data is automatically loaded into the automation devices.

10. Method according to claim 9,
**characterised in that**
the project planning data (1, 2, 3) is stored parallel to the runtime data (7, 8, 9) assigned to it in each case, distributed among the automation devices (5, 6) assigned to the runtime data (7, 8, 9) in each case.

11. Method according to claim 9 or 10,
**characterised in that**
the project planning data (1, 2, 3) is stored in a generic, expandable data filing format.

12. Method according to one of claims 9 to 11,
**characterised in that**
the project planning data (1, 2, 3) can be read and interpreted by the firmware of the automation system.

13. Method according to one of claims 9 to 12,
**characterised in that**
the firmware uses a parser to interpret the data filing format in which the project planning data (1, 2, 3) is stored.

14. Method according to one of claims 9 to 13,
**characterised in that**
by means of a generic interface of the firmware of the automation system, path-oriented access is possible to project planning data (1, 2, 3) stored in the form of a project tree.

15. Method according to one of claims 9 to 14,
**characterised in that**
by means of a specific interface of the firmware of the automation system it is possible to access stored project planning data (1, 2, 3) via predefined access paths.

16. Method according to one of claims 9 to 15,
**characterised in that**
the data filing format in which the project planning data (1, 2, 3) is stored is specified by a predefined object model, represented by a project tree, and by pattern definition files.

## Revendications

1. Système comprenant un ordinateur (12) pour garantir la cohérence entre des données de durée d'exécution et les données de projection correspondantes (1, 2, 3) dans un système d'automatisation (4) qui comporte des appareils d'automatisation (5, 6),
- les données de projection (1, 2, 3) étant associées à des données de durée d'exécution (7, 8, 9) et les données de projection (1, 2, 3) ayant été établies à l'aide de l'ordinateur (12) et converties en les données de durée d'exécution (7, 8, 9) dans une étape de conversion (13),
- les données de projection (1, 2, 3) étant accessibles conjointement avec les données de durée d'exécution (7, 8, 9) qui leur sont associées et étant mémorisées dans les appareils d'automatisation (5, 6),
- une routine de vérification automatique exécutée au moyen d'une itération continue étant prévue, qui dispose de moyens de reconnaissance pour reconnaître des modifications des données de durée d'exécution (7, 8, 9) et des données de projection (1, 2, 3) et
- dispose de moyens de vérification pour vérifier les dépendances entre les données de durée d'exécution (7, 8, 9) et les données de projection (1, 2, 3), qui détecte, en cas de reconnaissance d'une modification, des dépendances entre les données de durée d'exécution (7, 8, 9) et les données de projection (1, 2, 3) et charge automatiquement toutes les données modifiées et données concernées dans les appareils d'automatisation lors de la mise à jour des données de durée d'exécution (7, 8, 9).

2. Système selon la revendication 1, **caractérisé en ce que** les données de projection (1, 2, 3) font l'objet, parallèlement aux données de durée d'exécution (7, 8, 9) qui leur sont respectivement associées, d'un enregistrement réparti dans les appareils d'automatisation (5, 6) à chaque fois associés aux données de durée d'exécution (7, 8, 9).

3. Système selon la revendication 1 ou 2, **caractérisé en ce que** les données de projection (1, 2, 3) sont enregistrées dans un format de stockage de données extensible générique.

4. Système selon l'une des revendications précédentes, **caractérisé en ce que** les données de projection (1, 2, 3) peuvent être lues et interprétées par le firmware du système d'automatisation.

5. Système selon l'une des revendications précédentes, **caractérisé en ce que** le firmware comporte un programme d'analyse syntaxique pour l'interprétation du format de stockage de données dans lequel les données de projection (1, 2, 3) sont enregistrées.

6. Système selon l'une des revendications précédentes, **caractérisé en ce que** le firmware du système d'automatisation comprend une interface générique pour l'accès orienté chemin à des données de projection (1, 2, 3) stockées sous forme d'arbre à projet.

7. Système selon l'une des revendications précédentes, **caractérisé en ce que** le firmware du système d'automatisation comprend une interface spécifique avec des chemins d'accès prédéfinis pour l'accès à des données de projection (1, 2, 3) stockées.

8. Système selon l'une des revendications précédentes, **caractérisé en ce que** le format de stockage de données dans lequel les données de projection (1, 2, 3) sont enregistrées est déterminé par un modèle objet prédéfini, représenté par un arbre à projet, et par des fichiers de définition de schéma.

9. Procédé pour garantir la cohérence entre des données de durée d'exécution et les données de projection correspondantes (1, 2, 3) dans un système d'automatisation (4) qui comporte des appareils d'automatisation (5, 6),
- les données de projection (1, 2, 3) étant établies au moyen d'un ordinateur (12) et converties en données de durée d'exécution (7, 8, 9) dans une étape de conversion (13) et les données de projection (1, 2, 3) étant associées aux données de durée d'exécution (7, 8, 9),
- l'accès conjoint aux données de projection (1, 2, 3) et aux données de durée d'exécution (7, 8, 9) qui leur sont associées étant possible et les données de projection (1, 2, 3) étant enregistrées dans les appareils d'automatisation (5, 6) conjointement avec les données de durée d'exécution (7, 8, 9) qui leur sont associées,
- une routine de vérification automatique exécutée au moyen d'une itération continue reconnaissant des modifications des données de durée d'exécution (7, 8, 9) et des données de projection (1, 2, 3) grâce à des moyens de reconnaissance, et
- des dépendances entre les données de durée d'exécution (7, 8, 9) et les données de projection (1, 2, 3) étant détectées par cette routine de vérification grâce à des moyens de vérification en cas de reconnaissance d'une modification et toutes les données modifiées et données concernées étant automatiquement chargées dans les appareils d'automatisation lors de la mise à jour des données de durée d'exécution (7, 8, 9).

10. Procédé selon la revendication 9, **caractérisé en ce que** les données de projection (1, 2, 3) font l'objet, parallèlement aux données de durée d'exécution (7, 8, 9) qui leur sont respectivement associées, d'un enregistrement réparti dans les appareils d'automatisation (5, 6) à chaque fois associés aux données de durée d'exécution (7, 8, 9).

11. Procédé selon la revendication 9 ou 10, **caractérisé en ce que** les données de projection (1, 2, 3) sont enregistrées dans un format de stockage de données extensible générique.

12. Procédé selon l'une des revendications 9 à 11, **caractérisé en ce que** les données de projection (1, 2, 3) peuvent être lues et interprétées par le firmware du système d'automatisation.

13. Procédé selon l'une des revendications 9 à 12, **caractérisé en ce que** le firmware interprète le format de stockage de données dans lequel les données de projection (1, 2, 3) sont enregistrées au moyen d'un programme d'analyse syntaxique.

14. Procédé selon l'une des revendications 9 à 13, **caractérisé en ce qu'**un accès orienté chemin à des données de projection (1, 2, 3) stockées sous forme d'arbre à projet est possible par l'intermédiaire d'une interface générique du firmware du système d'automatisation.

15. Procédé selon l'une des revendications 9 à 14, **caractérisé en ce qu'**un accès à des données de projection (1, 2, 3) stockées est possible via des chemins d'accès prédéfinis par l'intermédiaire d'une interface spécifique du firmware du système d'automatisation.

16. Procédé selon l'une des revendications 9 à 15, **caractérisé en ce que** le format de stockage de données dans lequel les données de projection (1, 2, 3) sont enregistrées est déterminé par un modèle objet prédéfini, représenté par un arbre à projet, et par des fichiers de définition de schéma.
